(19) Europäisches Patentamt
European Patent Office
Office européen des brevets

(11) Publication number: **0 079 806**
**B1**

(12) **EUROPEAN PATENT SPECIFICATION**

(45) Date of publication of patent specification: **07.05.86**

(51) Int. Cl.$^4$: **C 08 K 5/13**, C 08 K 5/36

(21) Application number: **82306123.9**

(22) Date of filing: **17.11.82**

(54) **Stabilized polymers and their production and stabilizers therefor.**

(30) Priority: **17.11.81 JP 184865/81**

(43) Date of publication of application:
**25.05.83 Bulletin 83/21**

(45) Publication of the grant of the patent:
**07.05.86 Bulletin 86/19**

(84) Designated Contracting States:
**DE FR GB IT NL**

(56) References cited:
**DE-A-2 853 604**
**US-A-4 168 387**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Yachigo, Shinichi**
**11-7-305, Sone Higashimachi**
**2-chome, Toyonaka (JP)**
Inventor: **Ishii Tamaki**
**12-2, Uchihonmachi 1-chome**
**Suita (JP)**
Inventor: **Takahasi, Yukoh**
**11-8-208, Sone Higashimachi**
**2-chome, Toyonaka (JP)**
Inventor: **Terada, Yutaka**
**8-12, Fukatanicho**
**Nishinomiya (JP)**

(74) Representative: **Geering, Keith Edwin et al**
**REDDIE & GROSE 16 Theobalds Road**
**London WC1X 8PL (GB)**

**The file contains technical information submitted after the application was filed and not included in this specification**

EP 0 079 806 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the stabilization of polymeric substances.

It is well known that polymeric substances such as synthetic rubbers and synthetic resins are adversely affected by the action of heat, light and oxygen during their production, storage, processing or use, such action resulting for example in such phenomena as discoloration, softening, gellation or embrittlement.

To combat this, various phenolic or phosphite-type or sulfur-containing antioxidants have been heretofore added, singly or in combination, during the production or processing of polymeric substances.

For example, it is known to use a phenolic antioxidant (such as styrenated phenol, 2,6-di-t-butyl-4-methylphenol, 2,2'-methylene-bis(4-methyl-6-t-butylphenol), n-octadecyl-β-(3,5-di-t-butyl-4-hydroxyphenyl)propionate, or pentaerythritoltetrakis[β-(3,5-di-t-butyl-4-hydroxyphenyl)-propionate]) alone, or together with a phosphite-type antioxidant such as tris-(nonylphenyl)phosphite or distearyl pentaerythritol diphosphite, or in combination with a sulfur-containing antioxidant such as dilauryl thiodipropionate or distearyl thiodipropionate. However, these prior methods have not given satisfactory stability to heat, light and oxidation.

DE—A—2 853 604 describes stabilizers for polyolefine resins, comprising:

(a) an alkylthiopropionate, e.g. pentaerythritol-tetrakis-(3-n-dodecylthiopropionate) (page 14, last line); and also

(b) a phenolic compound (page 20, lines 1 and 17—28)

which have an increasing effect on the heat, light and oxidation stability of the polyolefine resins; among phenolic compounds mentioned is n-octadecyl-β-(3,5-di-t-butyl-4-hydroxyphenyl) propionate used as compound "AO—2" in the comparison runs of the present application.

Polyphenolic polymerizable ester compounds are used as stabilizers for synthetic rubbers according to US—A—4 168 387; among useful phenolic compounds is mentioned 2-(2-hydroxy-3-t-butyl-5-methylbenzyl)-4-methyl-6-t-butylphenyl-acrylate (column 3, lines 29—30; column 9, Example 4). According to US—A—4 168 387, however, the polyphenolic compound is copolymerized into the polymer chain as a built-in antioxidant, rather than being blended with the preformed polymer.

We have unexpectedly found that a stabilizer containing a particular ratio of a specific phenolic compound class and a specific sulfur compound class can confer on preformed polymeric substances surprisingly good stability to heat, light and oxidation and also good stability to heat discoloration.

The present invention provides a stabilizer for polymeric substances, the stabilizer comprising (a) at least one sulfur-containing compound of the general formula:

$$(R^1{-}S{-}CH_2CH_2{-}\underset{\underset{O}{\|}}{C}{-}O{-}CH_2)_4C \qquad (I)$$

wherein $R^1$ represents an alkyl group having 4 to 20 carbon atoms and (b) at least one phenolic compound of the general formula:

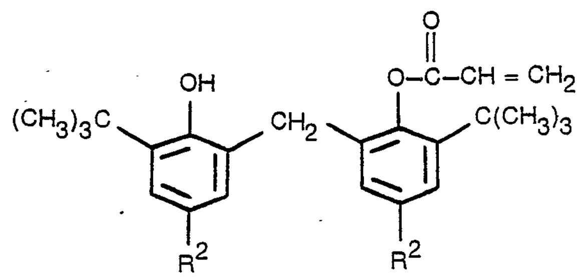

(II)

wherein the $R^2$'s are selected from alkyl groups having 1 to 4 carbon atoms, the weight ratio of (a):(b) being from 1:0.1 to 1:2 (preferably 1:0.2 to 1:1).

In the compounds (I) the substituent group $R^1$ may e.g. be butyl, hexyl, nonyl, dodecyl, cetyl, stearyl, or eicocyl, alkyl groups of 6 to 18 carbon atoms being preferred and dodecyl most preferred. In compounds (II) the $R^2$'s may be selected from methyl, ethyl, propyl and butyl, with methyl and ethyl preferred and methyl most preferred.

Representative examples of compounds of formulae (I) and (II) are shown respectively in Tables 1 and 2.

TABLE 1

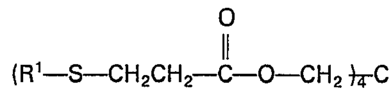

| Abbreviation | $R^1$ |
|---|---|
| I—1 | $-C_6H_{13}$ |
| I—2 | $-C_{12}H_{25}$ |
| I—3 | $-C_{18}H_{37}$ |

TABLE 2

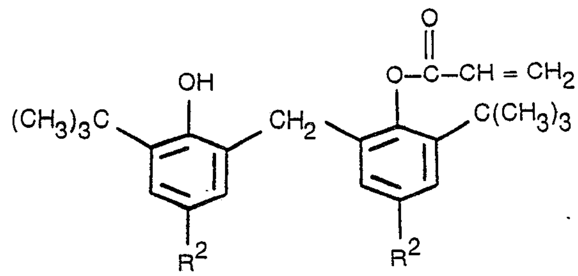

(II)

| Abbreviation | $R^2$ |
|---|---|
| II—1 | $-CH_3$ |
| II—2 | $-CH_2CH_3$ |
| II—3 | $-\underset{CH_3}{CH}CH_2CH_2$ |
| II—4 | $-C(CH_3)_3$ |

Such compounds can be produced by various methods.

For example, the phenolic compounds expressed by the general formula (II) can be produced by reacting in the usual way 2,2′-methylene-bis(6-t-butyl-4-alkyl-phenol)-represented by the general formula (III),

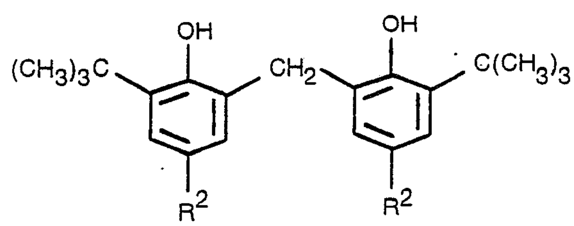

(III)

wherein R has the same meaning as mentioned above, with acrylic acid or a lower alkyl ester thereof, or its acid chloride.

For use in stabilizing a polymeric substance the ingredients (a) and (b) may be previously mixed, or incorporated separately, in the stated ratio.

The incorporation of compounds (a) and (b) in the polymeric substance may be by various methods. For example, when the polymeric substance is produced by emulsion polymerization, separate emulsions of (a) and (b) or an emulsion containing both may be prepared beforehand and added to the latex; when it is produced by bulk polymerization or suspension polymerization, the stabilizer ingredients may be added to monomeric starting material and/or to intermediate prepolymer, separately or in admixture; and when it is produced by solution polymerization, separate solutions or a combined solution of the ingredients in suitable organic solvent may be added to the gum cement. Whatever the process, the stabilizer ingredients may be added separately or in admixture.

The amount of stabilizer used according to the present invention (sulfur-containing compound and phenolic compound) is generally 0.1 to 2 weight parts (preferably 0.3 to 1.5 weight parts) of (a) and (b) for 100 weight parts of polymeric substance. Stabilized polymeric substances according to the invention have stability to heat, light and oxidation and resistance to discoloration by heat.

Stabilized polymeric compositions according to the present invention may include one or more further additives selected, for example, from ultraviolet absorbers, light stabilizers, antioxidants, metal-deactivators, metallic soaps, nucleating agents, lubricants, antistatic agents, flame retardants, pigments and fillers.

Thus incorporation of an ultraviolet absorber or a hindered amine-type light stabilizer can improve the resistance to light of the composition. As such light stabilizers there may be mentioned for example 2-hydroxy-4-methoxy-benzophenone; 2-hydroxy-4-n-octoxybenzophenone; 2(2-hydroxy-5-methylphenyl)benzotriazole; 2(2-hydroxy-3-t-butyl-5-methylphenyl)-5-chlorobenzotriazole; 2(2-hydroxy-3,5-di-t-butylphenyl)-5-chlorobenzotriazole; 2(2-hydroxy-3,5-di-amylphenyl)benzotriazole; Ni salt of butylamine[2,2′-thiobis(4-t-octylphenolate)]; 2,2,6,6-tetramethyl-4-piperidinyl benzoate; bis(2,2,6,6-tetramethyl-4-piperidinyl)cebacate; bis(1,2,2,6,6-pentamethyl-4-piperidyl)-2-(3,5-di-t-butyl-4-hydroxybenzyl)-2-n-butylmalonate; 1-[2-{3-(3,5-di-t-butyl-4-hydroxyphenyl)propionyloxy}ethyl]-4-[3-(3,5-di-t-butyl-4-hydroxyphenyl)propionyloxy]-2,2,6,6-tetramethylpiperidine; polycondensate of dimethyl succinate and 1-(2-hydroxyethyl)-4-hydroxy-2,2,6,6-tetramethylpiperidine, etc.

Incorporation of a phosphite-type antioxidant can improve discoloration resistance. As such phosphite-type antioxidants, there may be mentioned, for example, distearylpentaerythritol diphosphite; tris(2,4-di-t-butylphenyl)phosphite; tris(2-t-butyl-4-methylphenyl)phosphite; bis(2,4-di-t-butylphenyl)pentaerythritol diphosphite; bis(2,4-di-t-butylphenyl)pentaerythritol diphosphite; tetrakis(2,4-di-t-butylphenyl)-4,4′-biphenylene diphosphite, etc.

The polymeric substances that can be stabilized by the stabilizers of the present invention are mainly synthetic rubbers and synthetic resins. Among such rubbers may be mentioned synthetic (preferably solution polymerized) rubbers such as polybutadiene, polyisoprene and styrene-butadiene copolymer rubbers, ethylene-propylene terpolymer rubber, isoprene-isobutylene copolymer rubber, emulsion-polymerized styrene-butadiene copolymer rubber, emulsion-polymerized acrylonitrile-butadiene copolymer rubber, etc. The stabilizers of the present invention are particularly effective for solution-polymerized polybutadiene rubber, solution-polymerized polyisoprene rubber and solution-polymerized styrene-butadiene rubber.

Also, among such synthetic resins may be mentioned polyolefin resins, acrylontrile-butadiene-styrene terpolymer resins (ABS resins), polystyrene resins, high impact polystyrene resins, polyamide resins, polyester resins, polycarbonate resins, polyacetal resins and polyurethane resins. The stabilizers of the present invention are particularly effective for styrene-type resins and among others ABS resins.

### Reference Example 1

Into a four-mouth flask of 500 ml capacity, equipped with a thermometer, a dropping funnel and a stirrer, there are charged 82.0 g (0.241 mol) of 2,2′-methylene bis(6-t-butyl-4-methylphenol), 200 g toluene and 29.3 (0.29 mol) triethylamine. The air in the flask is replaced with nitrogen and the contents in the flask are cooled to 1°C. From the dropping funnel, 75 g of a mixed solution of 25 g (0.276 mol) acryloyl chloride and 50 g toluene is added dropwise in two hours. After the completion of addition, excess quantity of triethylamine is neutralized with dilute hydrochloric acid, and the resulting triethylamine hydrochloride is filtered off. The filtrate is washed with water and separated, and 180 g toluene is distilled away from the organic phase. When the distillation residue is recrystallized from 50 g n-hexane, 90 g (yield 95%) white crystals (II—1) are obtained. m.p. 133—134°C.

### Examples 1 to 6

The compounds shown in Tables 3 (Examples 1 to 6) and 4 (Comparison Runs 1 to 32) were kneaded by means of rolls into solution-polymerized polybutadiene rubber containing no antioxidant (rubber obtained by extracting the antioxidant from JSR BR—01 with acetone). The thus-obtained rubbers were used as sample rubbers and were tested for stability to heat and oxidation and resistance to heat-discoloration. JSR BR—01 is a solution polymerised polybutadiene rubber containing 97% cis-1, 4 bond.

The results are shown in Tables 3 and 4.

To assess stability to heat and oxidation, the sample rubbers were aged by heat in a gear oven at 100°C., the gel content (toluene-insoluble portion) was measured every 15 hours, and the time until the gel content reached 10 weight% (Gel I.P. hours) was evaluated as the stability to heat and oxidation.

The resistance to heat-discoloration was evaluated by the color of the rubbers after heat-ageing for 15, 60 and 120 hours in a gear oven at 100°C.

In the Tables, codes A0—1 to A0—5 mean the following compounds:

A0—1 2,6-di-t-butyl-4-methylphenol,

A0—2 n-octadecyl-β-(3,5-di-t-butyl-4-hydroxyphenyl)propionate,

A0—3 pentaerythritol-tetrakis[β-(3,5-di-t-butyl-4-hydroxyphenyl)propionate],

A0—4 dilauryl thiodipropionate, and

A0—5 tris(nonylphenyl)phosphite.

TABLE 3

| | Examples according to the invention | | | | | |
|---|---|---|---|---|---|---|
| | 1 | 2 | 3 | 4 | 5 | 6 |
| Compounds tested | Amount incorporated in weight parts per hundred of polymer | | | | | |
| II—1 | 0.25 | 0.25 | 0.25 | 0.5 | | |
| II—2 | | | | | 0.25 | 0.25 |
| I—1 | 0.75 | | | | 0.75 | |
| I—2 | | 0.75 | 1.0 | 1.0 | | 0.75 |
| Gel IP (hours) | 155 | 170 | 185 | 210 | 145 | 155 |
| Resistance to heat-discolouration | | | | | | |
| 0 hr | white | white | white | white | white | white |
| 15 hrs | white | white | white | white | white | white |
| 60 hrs | " | " | " | " | " | " |
| 120 hrs | " | " | " | " | " | " |

TABLE 4

| Compounds tested | Comparison Runs: 1 | 2 | 3 | 4 | 5 | 6 | 7 | 8 | 9 | 10 | 11 | 12 |
|---|---|---|---|---|---|---|---|---|---|---|---|---|
| | Added quantities in weight parts per hundred of polymer | | | | | | | | | | | |
| II—1 | 0.25 | 0.25 | | | | | | | | | | |
| II—2 | | | 0.25 | 0.25 | | | | | | | | |
| A0—1 | | | | | 0.25 | 0.25 | 0.25 | 0.25 | | | | |
| A0—2 | | | | | | | | | 0.25 | 0.25 | 0.25 | 0.25 |
| A0—3 | | | | | | | | | | | | |
| I—1 | | | | | 0.75 | | | | 0.75 | | | |
| I—2 | | | | | | 0.75 | | | | 0.75 | | |
| A0—4 | 0.75 | | 0.75 | | | | 0.75 | | | | 0.75 | |
| A0—5 | | 0.75 | | 0.75 | | | | 0.75 | | | | 0.75 |
| Gel IP (hrs) | 35 | 35 | 35 | 30 | 50 | 55 | 80 | 120 | 75 | 85 | 60 | 85 |
| Resistance to heat-discoloration | | | | | | | | | | | | |
| 0 hr | w | w | w | w | w | w | w | w | w | w | w | w |
| 15 hrs | " | " | " | " | " | " | " | " | " | " | " | " |
| 60 hrs | y | y | y | y | py | py | " | " | py | py | py | " |
| 120 hrs | " | " | " | " | y | y | y | y | y | y | y | py |

Note: w = white, y = yellow, py = pale yellow

TABLE 4 (Cont'd.)

| Compounds tested | Comparison Runs 13 | 14 | 15 | 16 | 17 | 18 | 19 | 20 | 21 | 22 | 23 | 24 |
|---|---|---|---|---|---|---|---|---|---|---|---|---|
| | Added quantities in weight parts per hundred of polymer | | | | | | | | | | | |
| II—1 | | | | | 0.25 | 0.5 | 1.0 | | | | | |
| II—2 | | | | | | | | 0.25 | 1.0 | | | |
| A0—1 | | | | | | | | | | 0.25 | 1.0 | |
| A0—2 | | | | | | | | | | | | 0.25 |
| A0—3 | 0.25 | 0.25 | 0.25 | 0.25 | | | | | | | | |
| I—1 | 0.75 | | | | | | | | | | | |
| I—2 | | 0.75 | | | | | | | | | | |
| A0—4 | | | 0.75 | | | | | | | | | |
| A0—5 | | | | 0.75 | | | | | | | | |
| Gel IP (hrs) | 95 | 120 | 85 | 115 | 10 | 20 | 35 | 10 | 25 | 40 | 100 | 35 |
| Resistance to heat-discoloration | | | | | | | | | | | | |
| 0 hr | w | w | w | w | w | w | w | w | w | w | w | w |
| 15 hrs | " | " | " | " | py | " | " | py | " | " | " | " |
| 60 hrs | " | " | py | " | y | y | y | y | y | py | " | y |
| 120 hrs | py | py | y | py | " | " | " | " | " | y | py | " |

TABLE 4 (Cont'd.)

| Compounds tested | Comparison Runs | | | | | | | |
|---|---|---|---|---|---|---|---|---|
| | 25 | 26 | 27 | 28 | 29 | 30 | 31 | 32 (no addition) |
| | Added quantities in weight parts per hundred of polymer | | | | | | | |
| II—1 | | | | | | | | |
| II—2 | | | | | | | | |
| A0—1 | | | | | | | | |
| A0—2 | 1.0 | | | | | | | |
| A0—3 | | 0.25 | 1.0 | | | | | |
| I—1 | | | | 0.75 | | | | |
| I—2 | | | | | 0.75 | | | |
| A0—4 | | | | | | 0.75 | | |
| A0—5 | | | | | | | 0.75 | |
| Gel IP (hrs) | 80 | 40 | 85 | 20 | 20 | 20 | 25 | 5 |
| Resistance to heat-discoloration | | | | | | | | |
| 0 hr | w | w | w | w | w | w | w | w |
| 15 hrs | " | " | " | py | py | py | " | y |
| 60 hrs | " | py | " | y | y | y | y | " |
| 120 hrs | py | y | py | " | " | " | " | " |

Examples 7 to 12

To 5% toluene solutions of solution-polymerized polyisoprene rubber containing no antioxidant (rubber obtained by extracting the antioxidant from JSR IR—2200 with acetone), the compounds shown in Tables 5 (Examples) and 6 (Comparison Runs) were respectively added and stirred to make uniform solutions. The residues after removal of toluene from these solutions were used as sample rubbers, and they were tested for stability to heat and oxidation and resistance to heat discoloration. JSR IR—2200 is a solution polymerised polyisoprene rubber containing 98% cis-1,4 bond.

The results are shown in Tables 5 and 6.

To assess stability to heat and oxidation, the sample rubbers were aged by heat in a gear oven at 70°C. for 7 days, and then the plasticity was measured by a Wallace Rapid Plastometer. The stability was evaluated by the plasticity retention index (PRI) from the following formula:

$$\text{PRI (\%)} = \frac{\text{Plasticity after ageing}}{\text{Plasticity before ageing}} \times 100$$

The resistance to heat discoloration was evaluated by the color of the rubber after ageing for 7 days in a gear oven at 70°C.

TABLE 5

| | Examples according to the invention | | | | | |
|---|---|---|---|---|---|---|
| | 7 | 8 | 9 | 10 | 11 | 12 |
| Compounds tested | Added quantities in weight parts per hundred of polymer | | | | | |
| II—1 | 0.25 | 0.25 | 0.25 | 0.5 | | |
| II—2 | | | | | 0.25 | 0.25 |
| I—1 | 0.75 | | | | 0.75 | |
| I—2 | | 0.75 | 1.0 | 1.0 | | 0.75 |
| After 7 days at 70°C. | | | | | | |
| PRI | 60 | 70 | 70 | 75 | 55 | 60 |
| Color | w | w | w | w | w | w |

TABLE 6

| | Comparison Runs | | | | | | | | | | | |
|---|---|---|---|---|---|---|---|---|---|---|---|---|
| | 33 | 34 | 35 | 36 | 37 | 38 | 39 | 40 | 41 | 42 | 43 | 44 |
| Compounds tested | Added quantities in weight parts per hundred of polymer | | | | | | | | | | | |
| II—1 | 0.25 | 0.25 | | | | | | | | | | |
| II—2 | | | 0.25 | 0.25 | | | | | | | | |
| A0—1 | | | | | 0.25 | 0.25 | 0.25 | 0.25 | | | | |
| A0—2 | | | | | | | | | 0.25 | 0.25 | 0.25 | 0.25 |
| A0—3 | | | | | | | | | | | | |
| I—1 | | | | | 0.75 | | | | 0.75 | | | |
| I—2 | | | | | | 0.75 | | | | 0.75 | | |
| A0—4 | 0.75 | | 0.75 | | | | 0.75 | | | | 0.75 | |
| A0—5 | | 0.75 | | 0.75 | | | | 0.75 | | | | 0.75 |
| After 7 days at 70°C. | | | | | | | | | | | | |
| PRI | 30 | 30 | 25 | 25 | 25 | 25 | 20 | 30 | 25 | 25 | 15 | 25 |
| Color | py | py | y | y | y | y | y | y | y | y | y | y |

TABLE 6 (Cont'd.)

| Compounds tested | Comparison Runs 45 | 46 | 47 | 48 | 49 | 50 | 51 | 52 | 53 | 54 | 55 | 56 | 57 |
|---|---|---|---|---|---|---|---|---|---|---|---|---|---|
| | Added quantities in weight parts per hundred of polymer | | | | | | | | | | | | |
| II—1 | | | | | 0.25 | 0.5 | 1.0 | | | | | | |
| II—2 | | | | | | | | 0.25 | 1.0 | | | | |
| A0—1 | | | | | | | | | | 0.25 | 1.0 | | |
| A0—2 | | | | | | | | | | | | 0.25 | 1.0 |
| A0—3 | 0.25 | 0.25 | 0.25 | 0.25 | | | | | | | | | |
| I—1 | 0.75 | | | | | | | | | | | | |
| I—2 | | 0.75 | | | | | | | | | | | |
| A0—4 | | | 0.75 | | | | | | | | | | |
| A0—5 | | | | 0.75 | | | | | | | | | |
| After 7 days at 70°C. | | | | | | | | | | | | | |
| PRI | 20 | 25 | 20 | 25 | 20 | 25 | 35 | 20 | 30 | 20 | 40 | 15 | 30 |
| Color | y | y | y | y | y | y | py | y | py | y | py | y | py |

TABLE 6 (Cont'd.)

| Compounds tested | Comparison Runs 58 | 59 | 60 | 61 | 62 | 63 | 64 (no addition) |
|---|---|---|---|---|---|---|---|
| | Added quantities in weight parts per hundred of polymer | | | | | | |
| II—1 | | | | | | | |
| II—2 | | | | | | | |
| A0—1 | | | | | | | |
| A0—2 | | | | | | | |
| A0—3 | 0.25 | 1.0 | | | | | |
| I—1 | | | 0.75 | | | | |
| I—2 | | | | 0.75 | | | |
| A0—4 | | | | | 0.75 | | |
| A0—5 | | | | | | 0.75 | |
| After 7 days at 70°C. | | | | | | | |
| PRI | 20 | 35 | 5> | 5> | 5> | 5> | 5> |
| Color | y | py | y | y | y | y | y |

Examples 13 to 18

To grafted ABS latex, suspensions obtained by bead-peptizing the compounds shown in Tables 7 (Examples) and 8 (Comparison Runs) by means of an anionic surface-active agent were added respectively in the quantities shown in Tables 7 and 8. In the usual way, the latices were salted out with aqueous magnesium sulfate solution, filtered, washed with water and dried. The thus-obtained ABS resin powders were used as test samples. Using the ABS resin powders and by the following procedure, the stability to heat and oxidation was evaluated. The results are shown in Tables 7 and 8.

1. The degree of discoloration of the ABS resin after heat-ageing in a gear oven at 180°C. was observed.

2. Using a measuring apparatus of oxygen absorption induction period, the oxygen absorption induction period (I.P.) was measured in an oxygen atmosphere at 170°C.

3. The ABS resin powder was extruded repeatedly through a small extruder (screw D = 20 mm ɸ, L/D = 25; strant die D = 3 mm ɸ, L/D = 10) under the following conditions, and the discoloration of the ABS pellets after the fourth extrusion was evaluated by their color difference ΔYI from the non-added ABS pellets of the first extrusion.

Extrusion conditions:

| | | | | |
|---|---|---|---|---|
| Number of revolution | 40 rpm | | | |
| Temperature: | $C_1$ | $C_2$ | $C_3$ | $C_4$ |
| | 220° | 240° | 260° | 280°C. |

4. The ABS pellets after the fourth extrusion obtained by the procedure of item 3 were compression molded at 180°C. for 10 minutes to produce the NO. 1 test pieces specified in JIS K—7111. The test pieces were measured in accordance with JIS K—7111 for Charpy impact value with a Charpy impact testing machine.

In Table 8, A0—6 is the compound 2,2′-methylene bis(4-methyl-6-t-butylphenol).

TABLE 7

| | Examples according to the invention | | | | | |
|---|---|---|---|---|---|---|
| | 13 | 14 | 15 | 16 | 17 | 18 |
| Compounds tested | Added quantities in weight parts per hundred of polymer | | | | | |
| II—1 | 0.5 | 0.5 | 0.5 | 0.5 | | |
| II—2 | | | | | 0.5 | 0.5 |
| I—1 | 0.5 | | | | 0.5 | |
| I—2 | | 0.5 | 0.75 | 1.0 | | 0.5 |
| Discoloration after 30 min. | py | py | py | py | py | py |
| after 60 min. | ybr | ybr | ybr | ybr | ybr | ybr |
| I.P. (min.) | 190 | 205 | 230 | 265 | 165 | 170 |
| ΔYI | 11.3 | 10.6 | 10.4 | 10.0 | 11.8 | 11.3 |
| Charpy impact value (kgf.cm/cm) | 20.4 | 21.3 | 21.8 | 21.9 | 18.9 | 18.3 |

Note: ybr = yellowish brown

TABLE 8

| Compounds tested | Comparison Runs 65 | 66 | 67 | 68 | 69 | 70 | 71 | 72 |
|---|---|---|---|---|---|---|---|---|
| | Added quantities in weight parts per hundred of polymer | | | | | | | |
| II—1 | 0.5 | 0.5 | | | | | | |
| II—2 | | | 0.5 | 0.5 | | | | |
| A0—1 | | | | | 0.5 | 0.5 | 0.5 | 0.5 |
| A0—6 | | | | | | | | |
| I—1 | | | | | 0.5 | | | |
| I—2 | | | | | | 0.5 | | |
| A0—4 | 0.5 | | 0.5 | | | | 0.5 | |
| A0—5 | | 0.5 | | 0.5 | | | | 0.5 |
| Discoloration after 30 min. | ybr | ybr | ybr | ybr | dbr | dbr | dbr | dbr |
| after 60 min. | dbr | dbr | dbr | dbr | bbr | bbr | bbr | bbr |
| I.P. (min.) | 130 | 130 | 110 | 95 | 150 | 150 | 140 | 125 |
| ΔYI | 12.5 | 12.0 | 13.1 | 12.4 | 14.3 | 14.5 | 15.0 | 13.8 |
| Charpy impact value (kgf.cm/cm) | 16.7 | 16.0 | 16.0 | 15.1 | 12.4 | 12.4 | 11.7 | 11.3 |

Note: dbr = deep brown
bbr = blackish brown

TABLE 8 (Cont'd.)

| Compounds tested | Comparison Runs: Added quantities in weight parts per hundred of polymer | | | | | | | |
|---|---|---|---|---|---|---|---|---|
| | 73 | 74 | 75 | 76 | 77 | 78 | 79 | 80 |
| II—1 | | | | | 0.5 | | | |
| II—2 | | | | | | 0.5 | | |
| A0—1 | | | | | | | 0.5 | |
| A0—6 | 0.5 | 0.5 | 0.5 | 0.5 | | | | 0.5 |
| I—1 | 0.5 | | | | | | | |
| I—2 | | 0.5 | | | | | | |
| A0—4 | | | 0.5 | | | | | |
| A0—5 | | | | 0.5 | | | | |
| Discoloration after 30 min. | rbr | rbr | rbr | rbr | ybr | ybr | dbr | rbr |
| after 60 min. | bbr | bbr | bbr | bbr | dbr | dbr | bbr | bbr |
| I.P. (min) | 155 | 145 | 140 | 130 | 120 | 95 | 110 | 110 |
| ΔYI | 17.1 | 16.9 | 17.3 | 15.9 | 12.8 | 13.3 | 14.0 | 16.3 |
| Charpy impact value (kgf.cm/cm) | 16.5 | 16.5 | 16.0 | 14.9 | 14.8 | 14.5 | 11.8 | 14.7 |

Note: rbr = reddish brown

TABLE 8 (Cont'd.)

| Compounds tested | Comparison Runs 81 | 82 | 83 | 84 | 85 | 86 | 87 (no addition) |
|---|---|---|---|---|---|---|---|
| | Added quantities in weight parts per hundred of polymer | | | | | | |
| II—1 | | | | | | | |
| II—2 | | | | | | | |
| A0—1 | | | | | | | |
| A0—6 | | | | | | | |
| I—1 | 0.5 | | | | | | |
| I—2 | | 0.5 | 0.75 | 1.0 | | | |
| A0—4 | | | | | 0.5 | | |
| A0—5 | | | | | | 0.5 | |
| Discoloration after 30 min. | dbr | dbr | dbr | dbr | dbr | dbr | dbr |
| after 60 min. | bbr | bbr | bbr | bbr | bbr | bbr | bbr |
| I.P. (min) | 30 | 30 | 40 | 45 | 20 | 20 | 10 |
| ΔYI | 15.3 | 15.1 | 15.0 | 15.3 | 15.8 | 13.9 | 15.9 |
| Charpy impact value (kgf.cm/cm) | 9.4 | 9.4 | 9.8 | 9.9 | 8.1 | 7.5 | 7.2 |

## Claims

1. A stabilizer for polymeric substances, the stabilizer comprising (a) at least one sulfur-containing compound of the general formula:

$$(R^1-S-CH_2CH_2-\underset{\underset{O}{\|}}{C}-O-CH_2)_4C \qquad (I)$$

wherein $R^1$ represents an alkyl group having 4 to 20 carbon atoms and (b) at least one phenolic compound of the general formula:

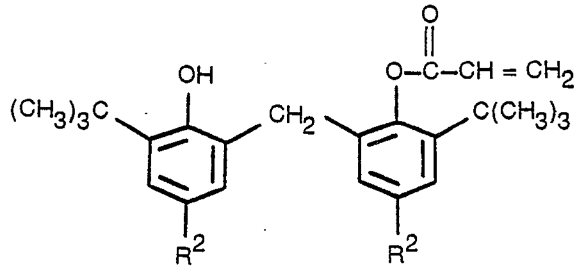

(II)

wherein the $R^2$'s are selected from alkyl groups having 1 to 4 carbon atoms, the weight ratio of (a):(b) being from 1:0.1 to 1:2.

2. A stabilizer according to claim 1 wherein (a) comprises pentaerythritol-tetrakis(β-dodecyl thiopropionate) and/or (b) comprises 2-(2-hydroxy-3-t-butyl-5-methylbenzyl)-4-methyl-6-t-butylphenyl acrylate.

3. A composition comprising a polymeric substance and a stabilizer therefor according to claim 1 or 2.

4. A composition according to claim 3 containing from 0.1 to 2% of said stabilizer based on the weight of polymeric substance.

5. A composition according to claim 3 or 4 wherein the polymeric substance comprises synthetic rubber, preferably obtained by solution polymerization.

6. A composition according to claim 5 wherein the synthetic rubber is selected from polybutadiene, polyisoprene and styrene-butadiene copolymer rubbers.

7. A composition according to claim 3 or 4 wherein the polymeric substance is a synthetic resin.

8. A composition according to claim 7 wherein the synthetic resin is a styrene resin, e.g. an acrylonitrile-butadiene-styrene copolymer resin.

9. A method of stabilizing a polymeric substance which comprises incorporating in the polymeric substance a stabilizer according to claim 1 or 2, the ingredients of the stabilizer being added separately or in admixture.

10. A method of forming a composition according to claim 3 which comprises separately or simultaneously adding the ingredients of the stabilizer to the polymeric substance or to prepolymer intermediate or monomer starting material therefor.

**Patentansprüche**

1. Stabilisierungsmittel für polymere Substanzen, wobei das Stabilisierungsmittel (a) wenigstens eine Schwefel enthaltende Verbindung der allgemeinen Formel

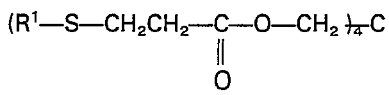

(I)

worin $R^1$ für eine Alkylgruppe mit 4 bis 20 Kohlenstoffatomen steht, und (b) wenigstens eine phenolische Verbindung der allgemeinen Formel

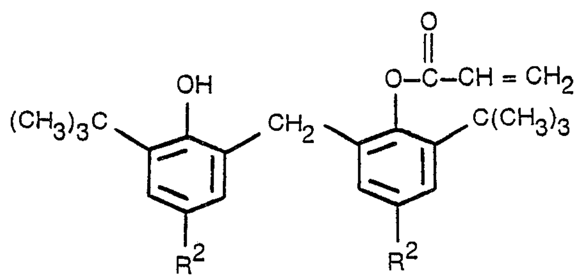

(II)

aufweist, worin die Substituenten $R^2$ ausgewählt sind aus Alkylgruppen mit 1 bis 4 Kohlenstoffatomen, und wobei das Gewichtsverhältnis (a):(b) 1:0,1 bis 1:2 beträgt.

2. Stabilisierungsmittel nach Anspruch 1, dadurch gekennzeichnet, daß (a) aus Pentaerythrit-tetrakis(β-dodecylthiopropionat) und/oder (b) aus 2-(2-Hydroxy-3-tert.-butyl-5-methylbenzyl)-4-methyl-6-tert.-butylphenylacrylat besteht.

3. Masse aus einer polymeres Substanz und einem Stabilisierungsmittel dafür gemäß Anspruch 1 oder 2.

4. Masse nach Anspruch 3, die 0,1 bis 2% des Stabilisierungsmittels, bezogen auf das Gewicht der polymeren Substanz, enthält.

5. Masse nach Anspruch 3 oder 4, dadurch gekennzeichnet, daß die polymere Substanz aus einem synthetischen Kautschuk, vorzugsweise erhalten durch Lösungspolymerisation, besteht.

6. Masse nach Anspruch 5, dadurch gekennzeichnet, daß der synthetische Kautschuk ausgewählt ist aus Polybutadien, Polyisopren und Styrol/Butadien-Copolymer-Kautschuken.

7. Masse nach Anspruch 3 oder 4, dadurch gekennzeichnet, daß die polymer Substanz ein synthetisches Harz ist.

8. Masse nach Anspruch 7, dadurch gekennzeichnet, daß das synthetische Harz ein Styrolharz, beispielsweise ein Acrylnitril/Butadien/Styrol-Copolymerharz, ist.

9. Verfahren zum Stabilisieren einer polymeren Substanz, dadurch gekennzeichnet, daß in die polymere Substanz ein Stabilisierungsmittel gemäß Anspruch 1 oder 2 eingebracht wird, wobei die Bestandteile des Stabilisierungsmittels getrennt oder in Mischung zugesetzt werden.

10. Verfahren zur Herstellung einer Masse gemäß Anspruch 3, dadurch gekennzeichnet, daß getrennt oder gleichzeitig die Bestandteile des Stabilisierungsmittels der polymeren Substanz oder dem Verpolymerzwischenprodukt oder dem Monomerausgangsmaterial dafür zugesetzt werden.

**Revendications**

1. Stabilisant pour substances polymériques, ce stabilisant comprenant (a) au moins un composé contenant du soufre, de formule générale:

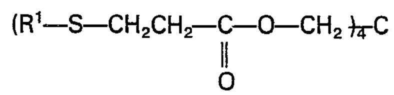

(I)

dans laquelle $R^1$ représente un groupe alkyle ayant 4 à 20 atomes de carbone et (b) au moins un composé phénolique de formule générale:

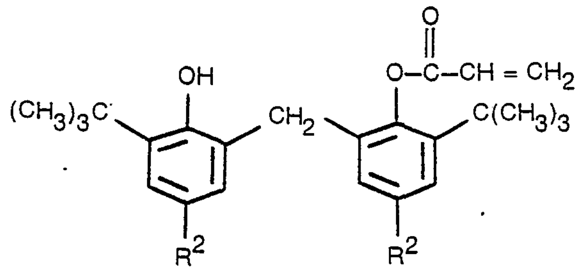

(II)

dans laquelle les groupes $R^2$ sont choisis entre des groupes alkyle ayant 1 à 4 atomes de carbone, le rapport en poids de (a):(b) ayant une valeur de 1:0,1 à 1:2.

2. Stabilisant suivant la revendication 1, dans lequel (a) comprend le tétrakis-(β-dodécylthiopropionate) de pentaérythritol et/ou (b) comprend l'acrylate de 2-(2-hydroxy-3-tertio-butyl-5-méthylbenzyl)-4-méthyl-6-tertio-butylphényle.

3. Composition comprenant une substance polymérique et un agent stabilisant pour cette substance suivant la revendication 1 ou 2.

4. Composition suivant la revendication 3, contenant 0,1 à 2% dudit stabilisant sur la base du poids de substance polymérique.

5. Composition suivant la revendication 3 ou 4, dans laquelle la substance polymérique comprend du caoutchouc synthétique, obtenu de préférence par polymérisation en solution.

6. Composition suivant la revendication 5, dans laquelle le caoutchouc synthétique est choisi entre des caoutchoucs de polybutadiène, de polyisoprène et de copolymère styrène-butadiène.

7. Composition suivant la revendication 3 ou 4, dans laquelle la substance polymérique est une résine synthétique.

8. Composition suivant la revendication 7, dans laquelle la résine synthétique est une résine de styrène, par exemple une résine de copolymère acrylonitrile-butadiène-styrène.

9. Procédé pour stabiliser une substance polymérique, qui comprend l'incorporation à la substance polymérique d'un stabilisant suivant la revendication 1 ou 2, les ingrédients du stabilisant étant ajoutés séparément ou en mélange.

10. Procédé pour former une composition suivant la revendication 3, qui consiste à ajouter séparément ou simultanément les ingrédients du stabilisant à la substance polymérique ou au prépolymère intermédiaire ou au monomère de départ correspondant.